# EUROPÄISCHE PATENTANMELDUNG

(11) **EP 1 726 840 A2**
(43) Veröffentlichungstag der Anmeldung: **29.11.2006**
(21) Anmeldenummer: 06008589.1
(22) Anmeldetag: 26.04.2006
(51) Int. Cl.: F16D 23/12

(54) **Kupplungsbetätigungsvorrichtung**

(30) Priorität: 25.05.2005 DE 102005024054
(71) Anmelder: LuK Lamellen und Kupplungsbau Beteiligungs KG, 77815 Bühl (DE)
(72) Erfinder: Greb, Peter, 77815 Bühl (DE); Mán, Lászlo, 77833 Ottersweier-Unzhurst (DE)

(57) **Zusammenfassung**

Die Erfindung schafft eine Kupplungsbetätigungsvorrichtung, insbesondere zur Betätigung einer Kupplung eines Fahrzeuges, mit mindestens einer Feder (1), deren Federkraft zur Betätigung der Kupplung mittels einer zugeordneten mechanischen Kraftübertragungsstrecke auf die Kupplung übertragbar ist, wobei die Kraftübertragungsstrecke ein Kraftübertragungselement umfasst, welches derart gelagert und verdrehbar ist, dass in Abhängigkeit des Verdrehwinkels die am Kraftübertragungselement ausgeleitete Kraft gegenüber der eingeleiteten Kraft veränderbar ist. Dabei ist die am Kraftübertragungselement eingeleitete Kraft die Federkraft der Feder, während die am Kraftübertragungselement ausgeleitete Kraft die Kupplungsbetätigungskraft FK ist. Vorzugsweise weist das erfindungsgemäße Kraftübertragungselement einen drehbaren Keil (3) auf, der in einem Lagerblock derart verdrehbar ist, dass eine kraftübertragende Keilfläche des Keils zwischen der Richtung der Federkraft der Feder und rechtwinkelig hierzu verdrehbar ist.

## Beschreibung

Die vorliegende Erfindung betrifft eine Kupplungsbetätigungsvorrichtung gemäß dem Oberbegriff des Patentanspruchs 1.

Bisher wurden Kupplungen beispielsweise mittels eines Hebels betätigt, der eine unveränderliche Hebellänge besitzt und beispielsweise mittels eines elektromotorischen Antriebs zum Öffnen und/oder Schließen der Kupplung angetrieben werden konnte. Wenn nun über den Betätigungsweg der Kupplung eine veränderliche Betätigungskraft aufgebracht werden musste, so wurde zu diesem Zweck der Elektromotor, um ein entsprechend hohes Moment zur Verfügung zu stellen, mit entsprechenden Stromwerten beaufschlagt. Eine andere Möglichkeit der Kupplungsbetätigung besteht beispielsweise in der Form eines von einem Elektromotor angetriebenen Zentralausrückers, wobei auch hier der Elektromotor mit hohen Stromwerten bestromt werden muss, um entsprechend hohe Abtriebsmomente zur Verfügung zu stellen. Darüber hinaus ist es erforderlich, den Elektromotor ― um eine Beschädigung der Kupplungsbetätigungsaktorik zu vermeiden ― nach dem Schließen der Kupplung schnell abzubremsen.

Um nun diese Problematik zu umgehen, wurde von der Anmelderin ein unter der DE 10 2004 009 832 A1 beschriebenes Hebelsystem zum Betätigen von Kupplungen geschaffen. Das dort beschriebene Hebelsystem weist Hebelarme mit veränderbaren Hebellängen auf, wobei zu diesem Zweck der den Hebel abstützende Hebeldrehpunkt entlang des Betätigungshebels verlagert werden kann und sich somit bei unveränderlichem Krafteinleitungspunkt in den Hebel in Abhängigkeit von der Verlagerung des Hebeldrehpunkts verschiedene wirksame Hebellängen ergeben. Obwohl ein solches Hebelsystem bereits vielfache Vorteile gegenüber bekannten Kupplungsbetätigungsvorrichtungen aufweist, läßt es trotzdem Raum für deutliche Verbesserungen zu.

Das nach dieser Offenlegungsschrift bekannte Hebelsystem wird an dem Krafteinleitungspunkt der Betätigungskraft in den Hebel mit einer vorbestimmbaren Kraft beaufschlagt. Ausgangsseitig, d. h. also beispielsweise auf der Seite eines Axiallagers, wirkt eine entsprechende, zur in den Betätigungshebel eingeleiteten Federkraft komplementäre Reaktionskraft. Da sich der Betätigungshebel ― umfasst ist hier beispielsweise auch eine Vielzahl von um das Axiallager radial sternförmig verlaufenden Betätigungshebeln ― an einem Hebeldrehpunkt abstützt, herrscht an diesem Abstützpunkt bei einem Hebellängenverhältnis von 1:1 zur Bildung eines Kräftegleichgewichts eine der doppelten Federkraft entsprechende Wederlagerkraft.

Ausgehend von diesem Stand der Technik ist es die Aufgabe der vorliegenden Erfindung, die in der Kupplungsbetätigungsvorrichtung auftretenden Kräfte gering zu halten und insbesondere die zur Verstellung der Kupplungskraft erforderlichen Kräfte so gering wie möglich zu halten.

Gelöst wird diese Aufgabe durch eine Kupplungsbetätigungsvorrichtung mit den Merkmalen des Patentanspruchs 1.

Demnach umfasst die erfindungsgemäße Kupplungsbetätigungsvorrichtung, die insbesondere zur Betätigung einer Kupplung eines Fahrzeuges vorgesehen ist, zumindest eine Feder, deren Federkraft zur Betätigung der Kupplung mittels einer zugeordneten mechanischen Kraftübertragungsstrecke auf die Kupplung übertragbar ist, wobei die Kraftübertragungsstrecke ein Kraftübertragungselement umfasst, welches derart gelagert und verdrehbar ist, dass in Abhängigkeit des Verdrehwinkels die am Kraftübertragungselement ausgeleitete Kraft gegenüber der eingeleiteten Kraft veränderbar ist. Vorzugsweise ist dabei die am Kraftübertragungselement eingeleitete Kraft die Federkraft der Feder, während die am Kraftübertragungselement ausgeleitete Kraft die Kupplungsbetätigungskraft ist.

Vorzugsweise weist das erfindungsgemäße Kraftübertragungselement einen verdrehbaren Keil auf, der in einem Lagerblock derart verdrehbar ist, dass eine kraftübertragende Keilfläche des Keils zwischen der Richtung der Federkraft der Feder und rechtwinkelig hierzu verdrehbar ist.

Die Federkraft, die auf den verdrehbaren Keil eingeleitet wird, und in Abhängigkeit des Verdrehwinkels des Keils an einer Keilfläche des Keils die Kupplungsbetätigungskraft ausgeleitet wird, steht mittels einer Druckrolle in Kontakt mit der Keilfläche und wird in die Kupplung bzw. eine Kupplungsdruckplatte direkt eingeleitet. Wird der Keilwinkel rechtwinklig zur Federkraft eingestellt, wirkt keine Kraft auf die Kupplung. Je weiter die Keilfläche in Richtung der Federkraft verdreht wird, desto mehr steigt die auf die Kupplung wirkende Kraft an. Zum Verdrehen des Keils ist nur eine kleine Verstellkraft erforderlich, so dass ein zum Verdrehen des Keils vorgesehener Elektromotor entsprechend klein bzw. schwach dimensioniert werden kann.

Bevorzugt ist an der Kupplungsbetätigungsvorrichtung zwischen der Druckrolle und der Kupplung ein Druckstück angeordnet, wobei das Druckstück mittels einer Lagerung in Richtung der Kupplungsbetätigungskraft axial verlagerbar ist und die Lagerung eine Abstützkraft auf ein Gehäuse der Kupplungsbetätigungsvorrichtung überträgt. Tritt beispielsweise Verschleiß an der Kupplung auf, so verändert sich die axiale Position der Kupplungsdruckplatte und damit des Druckstücks und der Druckrolle. Der Lagerblock verschiebt sich daraufhin entsprechend dem eingestellten Keilwinkel, so dass die Druckrolle eine vom Mittelpunkt bzw. der Drehachse abweichende Position auf der Keilfläche einnimmt. Der Keilwinkel und damit der auf die Kupplung wirkende Kraftanteil der Feder bleibt jedoch erhalten. Lediglich die Verstell- bzw. Haltekraft des Keils steigt geringfügig an, da die Druckrolle dann ein Drehmoment in den Keil einleitet. Somit bleibt bei einem Verschleiß oder einer wärmebedingten Ausdehnung der Kupplung die am Kraftübertragungselement ausgeleitete Kupplungsbetätigungskraft weitestgehend unverändert.

Vorzugsweise weist die erfindungsgemäße Kupplungsbetätigungsvorrichtung am Umfang der Kupplung verteilt eine Mehrzahl von Kraftübertragungsstrecken auf. Besonders vorteilhaft ist es, wenn sechs Kraftübertragungsstrecken am Umfang der Kupplung anzuordnen. Die erforderliche Anzahl ist abhängig vom Kupplungstyp und richtet sich außerdem nach der Tragfähigkeit der Lager und den Kraftanforderungen der Kupplung.

Als besonders vorteilhaft hat es sich herausgestellt, dass das verdrehbare Kraftübertragungselement von außerhalb eines Gehäuses der Kupplungsbetätigungsvorrichtung mittels eines Verstellstiftes verdrehbar ist.

Die erfindungsgemäße Kupplungsbetätigungsvorrichtung wird vorzugsweise zur Betätigung einer Längsdifferentialsperre eines Allradantriebs eines Fahrzeuges eingesetzt.

Die Erfindung wird unter Bezugnahme von Zeichnungen näher beschrieben.

Es zeigen:
- Figur 1: eine schematische Darstellung der erfindungsgemäßen Kupplungsbetätigungsvorrichtung;
- Figur 2: eine Teilquerschnittansicht einer bevorzugten Ausführungsform der erfindungsgemäßen Kupplungsbetätigungsvorrichtung;
- Figur 3: eine weitere Teilquerschnittansicht der bevorzugten Ausführungsform der erfindungsgemäßen Kupplungsbetätigungsvorrichtung und
- Figur 4: eine perspektivische Ansicht der bevorzugten Ausführungsform der erfindungsgemäßen Kupplungsbetätigungsvorrichtung (teilweise aufgebrochen).

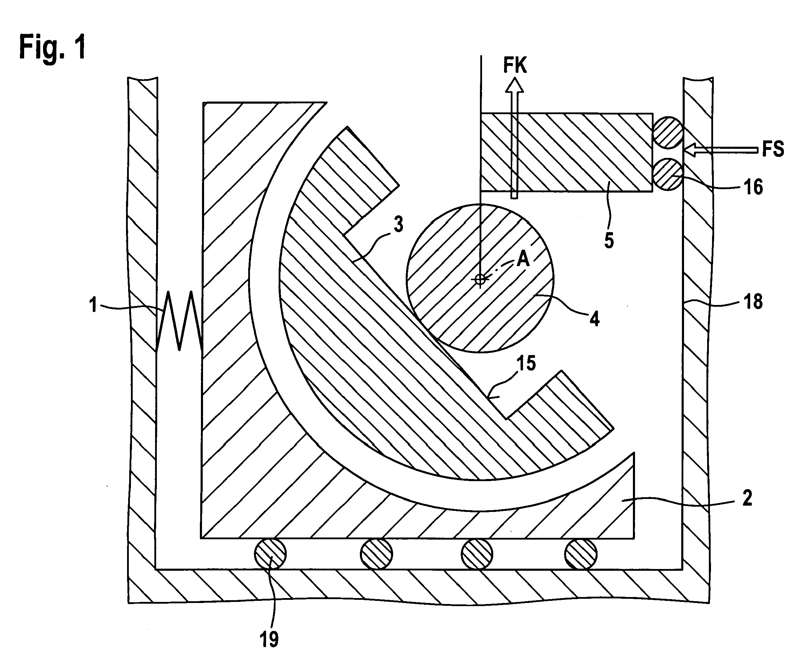

Die vorliegende Erfindung wird vorzugsweise als Nasskupplungsbetätigung für einen Allradantrieb mit Längsdifferentialsperre eingesetzt. In der Figur 1 ist der prinzipielle Aufbau dargestellt.

Gegen ein Gehäuse 18 stützt sich eine Feder 1 ab, die als "Kraftspender" fungiert und üblicherweise auch als Lastfeder bezeichnet wird. Diese Feder 1 drückt auf einen Lagerblock 2, welcher gegenüber dem Gehäuse 18 mittels einer Lagerung 19 verlagerbar ist. In dem Lagerblock 2 ist ein Keil 3 verdrehbar gelagert. Durch das Verdrehen des Keils 3 innerhalb des Lagerblocks 2 kann ein so genannter Keilwinkel, der durch die Keilfläche 15 ausgebildet ist, verändert werden. Auf dieser Keilfläche 15 läuft eine Druckrolle 4, an welcher wiederum rechtwinkelig zur Krafteinleitung durch die Feder 1 ein Druckstück 5 vorgesehen ist. Mittels des Druckstückes 5 wird eine Kupplung (nicht dargestellt) mit der Kupplungsbetätigungskraft FK betätigt.

Das Druckstück 5 ist gegenüber dem Gehäuse 18 ebenfalls gelagert, und zwar mittels einer Lagerung 16, über die die Abstützkraft FS übertragen werden kann. Die Druckrolle 4 ist um eine Drehachse A drehbar und normalerweise fällt der Drehpunkt der Keilfläche 15 mit dieser Drehachse A der Druckrolle 4 zusammen.

In Abhängigkeit von dem eingestellten Keilwinkel, d. h. der Winkellage der Keilfläche 15, wird ein Teil der Federkraft der Feder 1 über die Druckrolle 4 und das Druckstück 5 auf die Kupplung bzw. die Kupplungsdruckplatte übertragen. Der dazu rechtwinkelige Kraftanteil wird über die in Federkraftrichtung der Feder 1 angeordnete Lagerung 16 des Druckstücks 5 abgestützt.

Wird die Keilfläche 15 verdreht und damit zum Beispiel der Keilwinkel rechtwinkelig zur Federkraft der Feder 1 eingestellt, wirkt keine Kraft auf die Kupplung. Je weiter die Keilfläche 15 in Richtung der Federkraft der Feder 1 verdreht wird, desto mehr steigt die auf die Kupplung wirkende Kupplungsbetätigungskraft an.

Für die Verstellung und das Halten des Keils 3 ist eine nur geringe Betätigungskraft erforderlich. Daher kann ein entsprechend kleiner bzw. leistungsschwacher Verstellmotor vorgesehen werden, der vorzugsweise als Elektromotor ausgebildet ist. Ein solcher Motor nimmt auch entsprechend wenig Energie auf.

Für den Fall, dass ein Verschleiß an der Kupplung auftritt oder sich die Kupplung beispielsweise aufgrund von Wärme ausdehnt, so verändert sich die axiale Position der Kupplungsdruckplatte und damit des Druckstückes 5 und der Druckrolle 4. Der Lagerblock 2 verschiebt sich dann entsprechend dem eingestellten Keilwinkel der Keilfläche 15 des Keils 3, so dass die Druckrolle 4 eine vom Mittelpunkt bzw. der gezeigten Drehachse A abweichende Position auf der Keilfläche 15 anfährt. Der Keilwinkel und damit der auf die Kupplung wirkende Kraftanteil bleibt jedoch bei geeignet ausgelegter Feder 1 erhalten. Lediglich die Verstell- und Haltekraft des Keils 3 steigt etwas an, da die Druckrolle 4 dann ein Drehmoment in den Keil 3 einleitet.

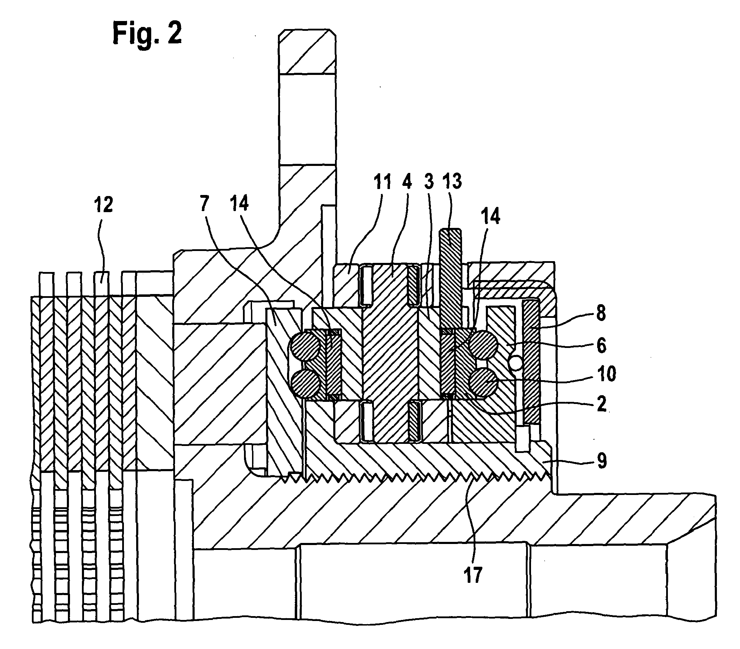

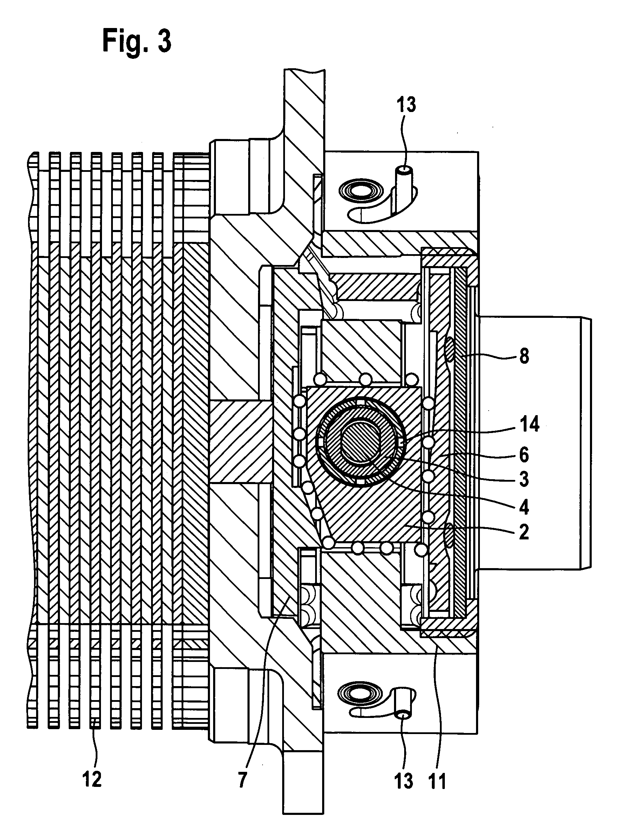

In den Figuren 2 und 3 sind Teilquerschnittansichten einer konstruktiven Ausführungsform der erfindungsgemäßen Kupplungsbetätigungsvorrichtung dargestellt. Die im Folgenden beschriebene und bevorzugte Ausführungsform der Kupplungsbetätigungsvorrichtung ist aus Gründen einer gleichmäßigen Krafteinleitung in sechsfacher Ausführung radial um die Kupplungsachse herum angeordnet. Die einzelnen Baueinheiten (jeder Kupplungsbetätigungsvorrichtung) sind gleichmäßig am Umfang verteilt, so dass diese im Winkelabstand von 60° zueinander angeordnet sind.

Eine gemeinsame Tellerfeder 8, die der Feder 1 in der Figur 1 entspricht, wirkt über eine erste Druckscheibe 6 axial auf die Lagerblöcke 2 aller Baueinheiten, die jeweils tangential verschieblich in Kugelumlaufeinheiten 10 gelagert sind. Innerhalb der Lagerblöcke 2 befindet sich je ein Nadellager 14, in welchem der verdrehbare Keil 3 und die Druckrolle 4 angeordnet sind. Die Druckrolle 4 ist über zwei kleinere Nadellager in einem Rollenträger 11 gelagert, an welchem sich die Tellerfeder 8 abstützt.

Die Federkraft der Tellerfeder 8 wirkt über die erste Druckscheibe 6 und den in den Kugelumlaufeinheiten 10 gelagerten Lagerblock 2, das Nadellager 14 und den Keil 3 auf die Druckrolle 4. Da die Druckrolle 4 im Abstützpunkt der Tellerfeder 8 gelagert ist, wird die Federkraft der Tellerfeder 8 so aufgeteilt, dass sie gemäß dem eingestellten Keilwinkel tangential auf den Lagerblock 2 wirkt und axial abgestützt ist.

In die kupplungsseitige Kugelumlaufbahn des Lagerblocks 2 sind Rampen eingearbeitet, welche die Tangentialkraft des Lagerblocks 2 gemäß dem Rampenwinkel in die mit Gegenrampen ausgestattete zweite Druckscheibe 7 axial einleitet. Die zweite Druckscheibe 7 betätigt dann das Lamellenpaket 12 der Kupplung. Die tangentiale Kraftkomponente der Rampen wird mittels Blattfedern abgefangen.

Bei einer axialen Bewegung der Kupplung (Ein- bzw. Ausrücken, Wärmedehnung, etc.) fahren die Lagerblöcke 2 entsprechend dem eingestellten Keilwinkel der Keilfläche des Keils 3 tangential nach, so dass die Kupplungsbetätigungskraft FK konstant bleibt.

Die beschriebene Baueinheit als erfindungsgemäße Kupplungsbetätigungsvorrichtung ist auf einer Hülse 9 mit einem Innengewinde 17 aufgebaut. Das Gewinde 17 dient der Verschleißnachstellung, die durch Verdrehen des Gewindes erfolgt.

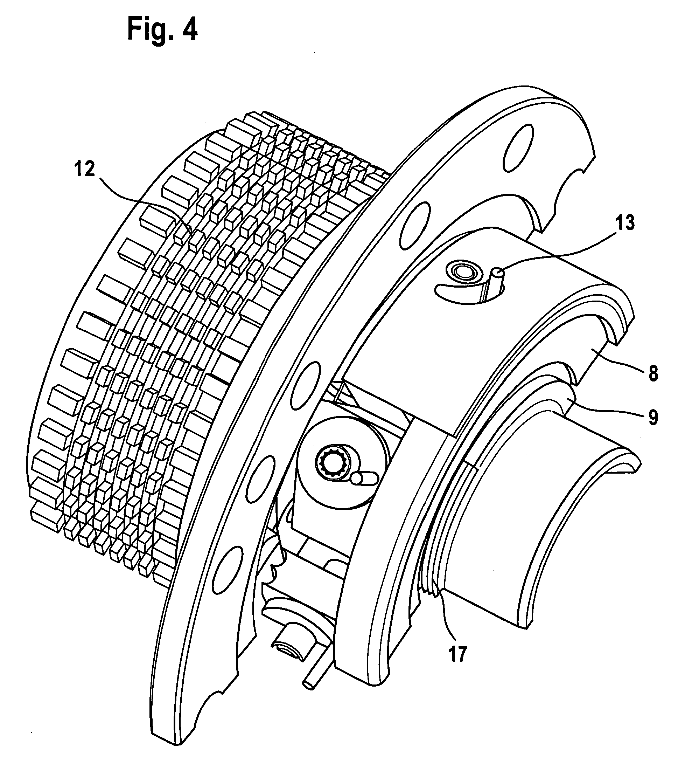

In der Figur 4 ist eine perspektivische Ansicht der Kupplungsbetätigungsvorrichtung nach der vorliegenden Erfindung gezeigt, wobei ein Betätigungsmechanismus für den verdrehbaren Keil über radial nach außen ragende Verstellstifte 13 realisiert ist, die mit der Antriebswelle umlaufen und über Axiallager (nicht dargestellt) drehentkoppelt sind. Wird die Position der Verstellstifte 13 über das Lager axial verändert, so werden die Keile 3 (am Umfang sind mehrere verteilt angeordnet) verdreht und die Kupplungsbetätigungskraft entsprechend variiert.

Durch die vorliegende Erfindung wird eine wegentkoppelte freie Krafteinstellung der Kupplungsbetätigungskraft ermöglicht. Es ist oben ein System mit variabler Einstellung der (Kraft-) Übersetzung durch Veränderung des Keilwinkels einer Keilfläche 15 beschrieben. Dadurch wird ein kompaktes und preisgünstiges sowie toleranzunabhängiges Einrücksystem für eine Kupplung ermöglicht.

### Bezugszeichenliste

- 1: Feder
- 2: Lagerblock
- 3: Keil
- 4: Druckrolle
- 5: Druckstück
- 6: erste Druckscheibe
- 7: zweite Druckscheibe
- 8: Tellerfeder
- 9: Hülse
- 10: Kugelumlaufeinheit
- 11: Rollenträger
- 12: Lamellenpaket
- 13: Verstellstift
- 14: Nadellager
- 15: Keilfläche
- 16: Lagerung
- 17: Gewinde
- 18: Gehäuse
- 19: Lagerung

- A: Drehachse
- FK: Kuppungsbetätigungskraft
- FS: Abstützkraft

## Patentansprüche

1. Kupplungsbetätigungsvorrichtung, insbesondere zur Betätigung einer Kupplung eines Fahrzeuges, mit mindestens einer Feder (1), deren Federkraft zur Betätigung der Kupplung mittels einer zugeordneten mechanischen Kraftübertragungsstrecke auf die Kupplung übertragbar ist, **dadurch gekennzeichnet, dass** die Kraftübertragungsstrecke ein Kraftübertragungselement umfasst, welches derart gelagert und verdrehbar ist, dass in Abhängigkeit des Verdrehwinkels die am Kraftübertragungselement ausgeleitete Kraft gegenüber der eingeleiteten Kraft veränderbar ist.

2. Kupplungsbetätigungsvorrichtung nach Anspruch 1, **dadurch gekennzeichnet, dass** die am Kraftübertragungselement eingeleitete Kraft die Federkraft der Feder (1) ist.

3. Kupplungsbetätigungsvorrichtung nach Anspruch 1 oder 2, **dadurch gekennzeichnet, dass** die am Kraftübertragungselement ausgeleitete Kraft die Kupplungsbetätigungskraft (FK) ist.

4. Kupplungsbetätigungsvorrichtung nach einem der Ansprüche 1 bis 3, **dadurch gekennzeichnet, dass** das Kraftübertragungselement einen verdrehbaren Keil (3) umfasst, der in einem Lagerblock (2) derart drehbar gelagert ist, dass eine kraftübertragende Keilfläche (15) des Keils (3) zwischen der Richtung der Federkraft der Feder (1) und rechtwinkelig hierzu verdrehbar ist.

5. Kupplungsbetätigungsvorrichtung nach einem der Ansprüche 1 bis 4, **dadurch gekennzeichnet, dass** das Kraftübertragungselement einen verdrehbaren Keil (3) umfasst, wobei die Federkraft in den Keil (3) eingeleitet wird und in Abhängigkeit des Verdrehwinkels des Keils (3) an einer Keilfläche (15) des Keils die Kupplungsbetätigungskraft (FK) ausgeleitet wird, die mittels einer Druckrolle (4), die in Kontakt mit der Keilfläche (15) steht, in die Kupplung eingeleitet wird.

6. Kupplungsbetätigungsvorrichtung nach Anspruch 5, **dadurch gekennzeichnet, dass** zwischen der Druckrolle (4) und der Kupplung ein Druckstück (5) angeordnet ist.

7. Kupplungsbetätigungsvorrichtung nach Anspruch 6, **dadurch gekennzeichnet, dass** das Druckstück (5) mittels einer Lagerung (16) in Richtung der Kupplungsbetätigungskraft (FK) axial verlagerbar ist und die Lagerung (16) eine Abstützkraft (FS) auf ein Gehäuse (18) der Kupplungsbetätigungsvorrichtung überträgt.

8. Kupplungsbetätigungsvorrichtung nach Anspruch 7, **dadurch gekennzeichnet, dass** der Lagerblock (2) an dem Gehäuse (18) mittels einer Lagerung (19) in Richtung der Federkraft der Feder (1) verlagerbar ist.

9. Kupplungsbetätigungsvorrichtung nach einem der Ansprüche 5 bis 8, **dadurch gekennzeichnet, dass** eine Drehachse (A) des verdrehbaren Keils (3) mit der Drehachse (A) der Druckrolle (4) zusammen fällt.

10. Kupplungsbetätigungsvorrichtung nach Anspruch 9, **dadurch gekennzeichnet, dass** eine Verstell- und Halteeinrichtung des Keils (3) das sich aus der Drehachsenabweichung ergebende Moment am Keil (3) abstützt.

11. Kupplungsbetätigungsvorrichtung nach einem der Ansprüche 1 bis 10, **dadurch gekennzeichnet, dass** am Umfang der Kupplung gleichmäßig verteilt mehrere mindestens 3 oder durch die Zahl 3 teilbare Federn (1) und/oder Kraftübertragungsstrecken vorgesehen sind.

12. Kupplungsbetätigungsvorrichtung nach einem der Ansprüche 1 bis 11, **dadurch gekennzeichnet, dass** das verdrehbare Kraftübertragungselement von außerhalb eines Gehäuses (18) der Kupplungsbetätigungsvorrichtung mittels eines Verstellstiftes (13) verdrehbar ist.

13. Kupplungsbetätigungsvorrichtung nach einem der Ansprüche 1 bis 12, **dadurch gekennzeichnet, dass** sie zur Betätigung einer Längsdifferentialsperre eines Allradantriebs des Fahrzeuges dient.

14. Kupplungsbetätigungsvorrichtung nach Anspruch 2, **dadurch gekennzeichnet, dass** die Feder (1) eine Tellerfeder ist.
